# EUROPÄISCHE PATENTANMELDUNG

(11) **EP 0 694 461 A2**
(43) Veröffentlichungstag der Anmeldung: **31.01.1996**
(21) Anmeldenummer: 95810320.2
(22) Anmeldetag: 11.05.1995
(51) Int. Cl.: B60T 7/18, B61H 7/00

(54) **Einrichtung zur Notbremsung für schienengebundene Fahrzeuge**

(30) Priorität: 27.07.1994 CH 2378/94
(71) Anmelder: Stöcklin Logistik AG, CH-4147 Aesch (CH)
(72) Erfinder: Strub-Neuschütz, Dieter, CH-4132 Muttenz (CH); Brogli, Daniel, CH-4106 Therwil (CH)
(74) Vertreter: Braun, André

(57) **Zusammenfassung**

Die Einrichtung zur Notbremsung für schienengebundene Fahrzeuge weist einen in vertikale Richtung verfahrbaren Schlitten oder Wagen (33) auf, welcher mit einem Abtastorgan (19) eine ortsfest installierte Kontrollkurve (17) oder Steuerkontur auf einer plankenförmigen Kontrollkurvenfläche (10) abtastet. Der Schlitten oder Wagen (33) weist ein zweites Abtastorgan (20, 43) auf, welches in Kontakt mit einer zweiten Kontrollkurve (18, 18') der Kontrollkurvenfläche (10) treten kann. Dieser Fall tritt dann ein, wenn bei Ueberschreiten einer zulässigen Geschwindigkeit des Fahrzeuges das Abtastorgan der Kontrollkurve (17) nicht mehr folgen kann, den Kontakt mit der Kontrollkurve (17) verliert und eine Bewegung freien Falles ausführt. Bei Kontakt des zweiten Abtastorganes mit der zweiten Kontrollkurve wird die Auslösevorrichtung für eine an dem Fahrzeug befindliche Bremse betätigt.

## Beschreibung

Die vorliegende Erfindung betrifft eine Einrichtung zur Notbremsung für schienengebundene Fahrzeuge nach dem Oberbegriff des Anspruchs 1.

Eine Einrichtung ähnlicher Art ist bekannt aus der Patentschrift CH 663 933.

Einrichtungen der genannten Art haben sich in der Praxis gut bewährt, dies auch wegen des konstruktiv gegebenen Vorteils, bei der Installation solcher Einrichtungen von Fall zu Fall unterschiedliche Bedingungen berücksichtigen zu können.

Eine nachträgliche Modifikation der Notbremseinrichtungen an andere Vorgaben war bis jetzt jedoch nur mit erheblichem Aufwand verbunden, wie auch die Anfertigung solcher Einrichtungen einen gewissen Kostenfaktor darstellte, der im Hinblick auf erzielte Vorteile jedoch im allgemeinen von untergeordneter Bedeutung war.

Aufgabe der vorliegenden Erfindung ist es daher, eine verbesserte Notbremsvorrichtung insbesondere für Regalbediengeräte anzugeben, welche unter Beibehaltung einer sicheren und zuverlässigen Funktionsweise bei Herstellung, Installation, Wartung und Modifikation signifikante Kostenvorteile im Vergleich zu bekannten Lösungen bietet.

Diese Aufgabe wird gelöst durch Anordnungen und Massnahmen, wie sie durch die kennzeichnenden Teile der Ansprüche 1 und 2 spezifiziert werden. Weitergehende und bevorzugte Ausgestaltungen der Erfindung werden in den abhängigen Ansprüchen angegeben.

Die Erfindung basiert auf der Erkenntnis, dass die Herstellung, Installation, Wartung und Modifikation einer mechanisch ausgelegten, eigensicheren Einrichtung zur Notbremsung eines Schienenfahrzeuges wesentlich leichter dadurch gestaltet werden kann, wenn zum einen eine ebene, sich in horizontaler Richtung erstreckende, plankenförmige Kontrollkurvenfläche vorgesehen wird, welche mit zwei Steuerkonturen versehen ist und die sich an deren Ober- bzw. Unterseite befinden.

Diese Kontrollkurvenfläche ist gemäss der Erfindung ausserhalb des Fahrzeuges ortsfest an einer Gebäudewand oder einer Trägerkonstruktion befestigt und bevorzugt aus Stahlblech hergestellt.

Hierbei dient eine an der Oberseite der Kontrollkurvenfläche angebrachte erste Steuerkontur als mechanische Steuerkurve, um ein am Fahrzeug angebrachtes, bewegliches mechanisches Kontrollorgan zwangsweise anzuheben.

Die genannten Erleichterungen bzw. Vereinfachungen ergeben sich gemäss der Erfindung zum anderen dadurch, dass das mechanische Kontrollorgan in Form eines Kontroll-Oszillators ausgebildet ist, welcher in vertikaler Richtung frei verschiebbar ist.

Gemäss der Erfindung ist es dabei herstelltechnisch von Vorteil, für den Kontroll-Oszillator eine flächige Gestalt vorzusehen, und dessen freie Verschiebbarkeit in vertikale Richtung durch mehrere, auf Führungsschienen laufende Räder zu gewährleisten.

Unter normalen Voraussetzungen liegt der Kontroll-Oszillator aufgrund seines Eigengewichtes mit einem Abtastorgan, z.B. einer Führungsrolle, auf der genannten ersten Steuerkontur auf.

Die genannte erste Steuerkontur wird ergänzt durch eine zweite Steuerkontur, welche im folgenden auch als Abschlagkontur bezeichnet wird und welche die Berandung der Kontrollkurvenfläche an deren unterer Seite bzw. Kante darstellt.

Diese Abschlagkontur dient dazu, bei unzulässig hoher Geschwindigkeit des Fahrzeugs, mit einem zweiten abtastenden Element des Oszillators in Kontakt zu treten, so dass durch eine solche mechanische Kontaktgabe der vorgesehene Bremsvorgang, insbesondere Notbremsvorgang, ausgelöst wird.

Das genannte zweite abtastende Element ist dabei bevorzugt als Abschlagvorrichtung, z.B. in Form eines Hebels ausgelegt, welcher bei zu hoher Fahrzeuggeschwindigkeit mit der unteren Steuerkontur der Kontrollkurvenfläche in Interaktion tritt.

Die genannte Interaktion eines zweiten Abtastelementes, z.B. eines Abschlaghebels, mit der unteren Steuerkontur der Kontrollkurvenfläche, beruht insbesondere darauf, dass dem Kontroll-Oszillator zusätzlich zur ständig wirkenden, durch die Schwerkraft verursachten Beschleunigung g normalerweise eine wechselnde Beschleunigung überlagert wird, welche durch die Einwirkung der obenliegenden Kontroll-Kontur der Kontrollkurvenfläche auf die erste Abtastvorrichtung und eine daraus resultierende Hebe- und Senkbewegung des Kontroll-Oszillators zurückzuführen ist. Da der Oszillator durch die genannte Kontrollkontur nur einseitig geführt wird, kann er sich bei zu hoher horizontaler Fahrzeuggeschwindigkeit im Bereich der Kuppen der ersten Steuer- oder Kontrollkontur (Hebe-/Senk-Kontur) von dieser lösen, und zwar in einer vertikal gerichteten Relativbewegung.

Dieser Fall tritt immer dann ein, wenn das Fahrzeug eine kritische Geschwindigkeit überschritten hat und ein lokaler Krümmungsradius der Kontur im Bereich der genannten Kuppen so klein ist, dass eine Verfolgung dieser Kontur (Hebe-/Senkkontur) durch das Abtastorgan nicht mehr möglich ist, und der Schwerpunkt des Oszillators die Bewegung eines schiefen Wurfes bzw. freien Falles ausführt.

Dies heisst auch, dass der Oszillator sich bereits vor Erreichen des obersten Punktes einer Kupppe von der Hebe-/Senkkontur lösen kann. Dementsprechend ist, da gemäss der Erfindung der Abstand zwischen erstem Abtastorgan und zweitem Abtastorgan (Abschlagorgan) konstant ist, bereits in dieser Phase eine Interaktion zwischen einem Abschlagkörper oder einer Abschlagvorrichtung mit der untengelegenen Abschlagkontur möglich.

Die Abschlagkontur ist in einem bevorzugten Ausführungsbeispiel der Erfindung an die genannte Bewegung des schiefen Wurfes angepasst, so dass eine besonders wirksame Interaktion einer Abschlagvorrichtung mit einer gezahnt oder geriffelt strukturierten Abschlagkontur 18' stattfinden kann.

Ein Ausführungsbeispiel der Erfindung wird im folgenden anhand der Zeichnung erläutert.

Es zeigen:
- Fig. 1: die allgemeine Wirkungsweise der Erfindung in schematischer Form;
- Fig. 2: das Zusammenspiel eines Kontroll-Oszillators mit den Konturen einer Kontroll-Kurvenfläche;
- Fig. 3: weitere Einzelheiten zum Zusammenspiel zwischen Kontroll-Oszillator und Kontroll-Kurvenfläche;
- Fig. 4: die Seitenansicht auf das Fahrwerk eines Lagerbediengerätes und eine zugehörige Notbremseinrichtung;
- Fig. 5: Steuerkonturen, die durch eine eher parabelförmige Berandung einer Kontrollkurvenfläche definiert werden;
- Fig. 6: die dynamischen Verhältnisse für Steuerkonturen, die durch sinusförmige Berandung einer Kontrollkurvenfläche definiert werden und
- Fig. 7: die Steuerkonturen und Dimensionierung einer Abtastrolle und zugehöriger Abschlagvorrichtung bei einer realisierten Ausführungsform.

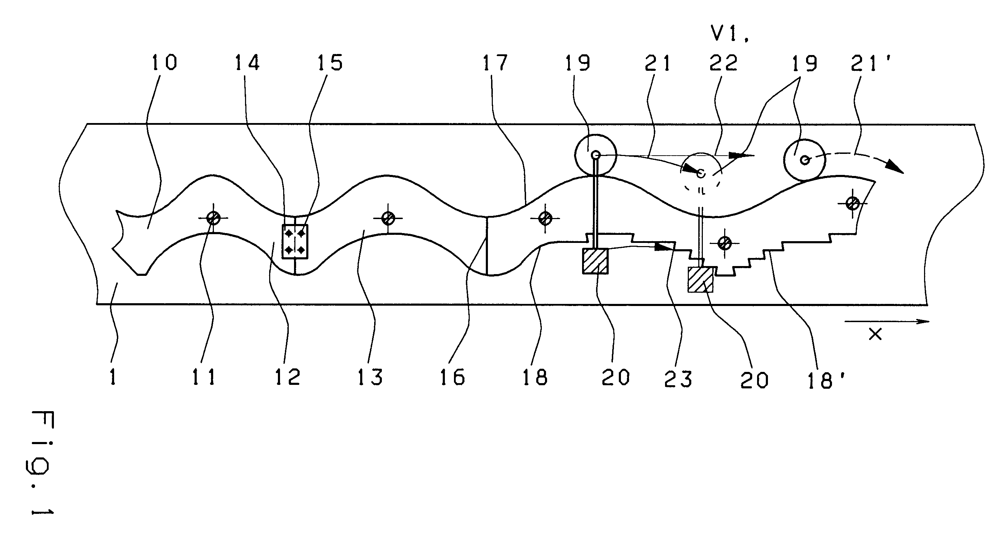

Fig. 1 zeigt in Form einer Schemazeichnung die allgemeine Wirkungsweise der Erfindung. An einer Wand oder einem Träger 1 ist mittels mehrerer Distanzhalter oder Distanzbolzen 11 eine Kontrollkurvenfläche 10 in bevorzugt planparallelem Abstand angebracht.

Die Kontrollkurvenfläche besitzt in Längsrichtung jeweils an ihrer oberen und unteren Kante Ausnehmungen, so dass die entsprechenden Kanten einen insgesamt wellenförmigen Charakter aufweisen.

Die Kontrollkurvenfläche kann dabei aus einem einzigen, zusammenhängenden Stück gefertigt oder aus mehreren Segmenten zusammengesetzt sein, zum Beispiel unter Verwendung von Laschen als Verbindungselementen.

Eine Abtastrolle 19, welche in horizontaler Bewegungsrichtung fest mit einem Regalbediengerät verkoppelt sein möge, ist diesem gegenüber in vertikaler Richtung frei verschiebbar und liegt normalerweise auf der oberen Kante bzw. Kontur (Hebe/Senkkontur 17 ) der Kontrollkurvenfläche auf.

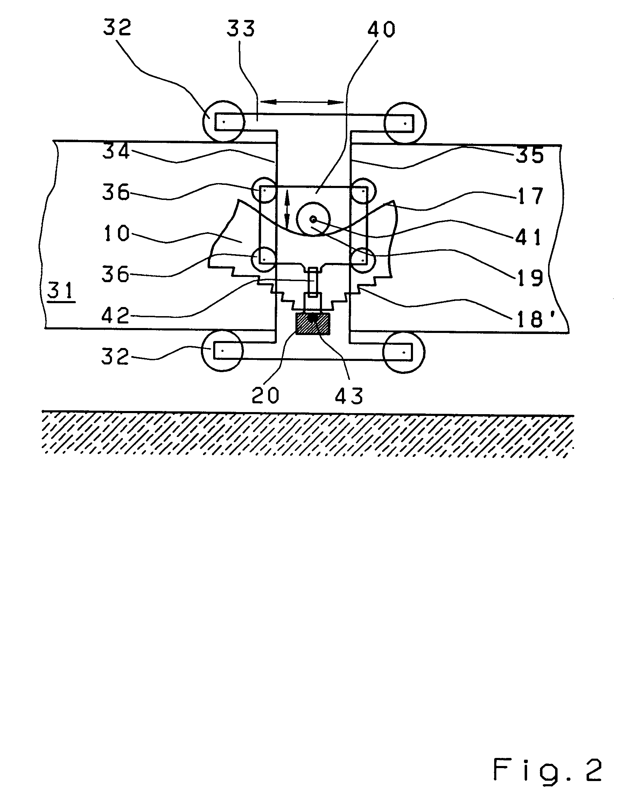

Bei Bewegung des Regalbediengerätes wird die Abtastrolle 19 zwangsweise nach Massgabe der wellenförmigen Kontur 17 in vertikaler Richtung angehoben, und fällt unter dem Einfluss der Schwerkraft jeweils soweit auf diese Hebe-/Senkkontur 17 herab, dass der Kontakt mit dieser im Normalfall aufrechterhalten wird. Oszillatorkörper 40 (Fig. 2) und Abschlagkörper 20 werden dabei sinngemäss mitbewegt.

Gemäss der Erfindung ist es von wesentlicher Bedeutung, dass die Abtastrolle 19 durch die Hebe-/Senkkontur 17 nur einseitig geführt wird.

Bei genügend hoher Geschwindigkeit des Fahrzeuges kann die Abtastrolle eine nicht gebundene Eigenbewegung ausführen, die nur den Gesetzen des freien Falles bzw. des schiefen Wurfes unterworfen ist.

Ein solcher Bewegungsablauf wird durch die Fallparabel 21 gekennzeichnet, welcher jedoch nur einen von verschiedenen Fällen wiedergibt.

Es ist ersichtlich, dass sich bei genügend hoher Horizontalgeschwindigkeit der Abtastrolle 19 die parallel verlaufende Bewegung des Abschlagkörpers 20 zu dessen Berührung mit der Abschlagkontur 18' an Auftreffpunkt 23 führt.

Bei geringen Horizontal-Geschwindigkeiten kommt es nicht zur freien Fallbewegung, und der fest zur Abtastrolle beabstandete Abschlagkörper kann nicht in Kontakt mit der Abschlagkontur 18 der Kontrollkurvenfläche treten.

Es ist jedoch möglich, durch eine variable Konturgebung insbesondere bei der Hebe-/Senkkontur 17 auch ortsabhängige Grenzgeschwindigkeiten vorzusehen, bei der die konturgeführte Vertikalbewegung der Rolle 19 in eine Bewegung des freien Falles übergeht, was wiederum zu einem Auftreffen des Abschlagkörpers 20 auf die Abschlagkontur 18 bzw. 18' führen kann. Ob es zu einem solchen Auftreffen kommt, hängt von der Formgebung der Abschlagkontur 18 bzw. 18' ab.Kommt es zu einem solchen Auftreffen, so führt dies gemäss der Erfindung unter Zuhilfenahme weiterer hierzu vorgesehenen Einrichtungen dazu, dass sofort ein Bremsvorgang für das Fahrzeug oder Lagerbediengerät eingeleitet wird.

Die Interaktion zwischen einem Abschlagkörper 20 und der Abschlagkontur 18 erfolgt wirksamer und zuverlässiger, wenn anstelle einer stetigen Kontur 18 eine unstetig geformte, also treppenförmige Abschlagkontur 18' vorgesehen wird. Im allgemeinen hat die Abschlagkontur 18 näherungsweise überall vergleichbaren Vertikalabstand zur Hebe-/Senkkontur. Es ist ersichtlich, dass bei reduziertem Abstand zwischen diesen Konturen eine Kontaktierung des Abschlagkörpers 20 mit der Abschlagkontur 18 bzw. 18' erst bei erhöhter Horizontalgeschwindigkeit stattfindet.

Andererseits kann ein entsprechend vergrösserter Abstand zwischen diesen Konturen dazu herangezogen werden, um in Nähe eines Gleisendes oder Laufschienenendes eine zwangsweise Kontaktierung von Abschlagkörper 20 und Abschlagkontur 18 zu bewirken. Dies würde somit eine Zwangsbremsung des Fahrzeugs auslösen, und zwar unabhängig von dessen aktueller Geschwindigkeit.

Eine Bewegung der Abtastrolle 19 entlang der in Fig. 1 ebenfalls gezeigten Fallparabel 21' findet bei erhöhten Fahrgeschwindigkeiten statt und wird später erörtert. Obwohl die Kontrollkurvenfläche 10 insbesondere in Form einzelner Teilstücke vergleichsweise einfach herstellbar ist, versteht es sich, dass für eine zuverlässige Funktionsweise der erfindungsgemässen Vorrichtung die Konturen 17 und 18' keine nennenswerten Abweichungen von vordefinierten Nominalwerten aufweisen dürfen und insbesondere auch die Verbindung an den Fügestellen 16 mit der gebührenden Präzision ausgeführt sein muss.

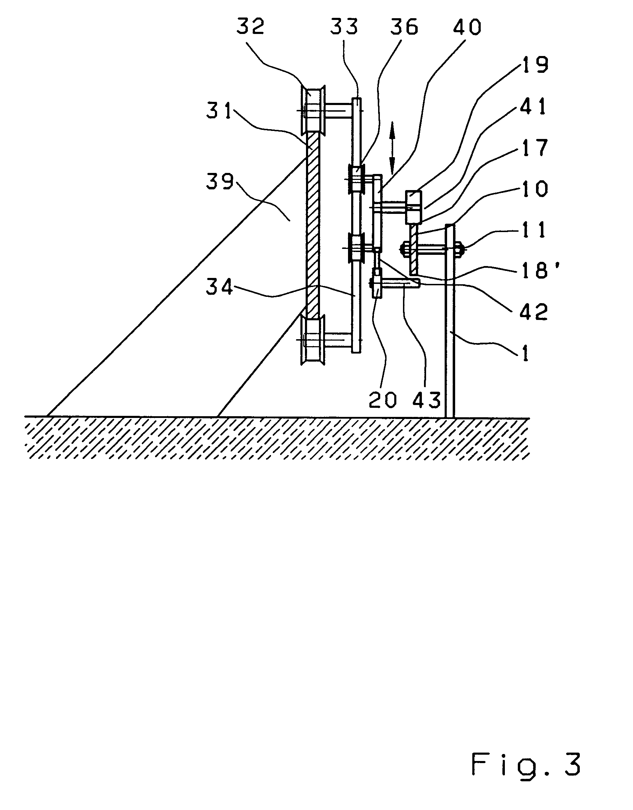

Weitere Details zur Wirkungsweise der erfindungsgemässen Konstruktion zeigen in abstrahierter Darstellung die Fig. 2 und 3 (Aufsicht bzw. Seitenansicht).

Hinter einem Teilstück einer Kontrollkurvenfläche 10, welches zum Zwecke der vereinfachten Darstellung als transparentes Teil gezeichnet ist, befindet sich eine Führungsschiene 31, welche beispielsweise durch Stützen 39 gehalten wird.

Auf der Führungsschiene 31 ist ein mittels Laufrädern 32 gelagerter Wagen 33 in horizontaler Richtung verschiebbar. Dieser besitzt in seiner Mitte links- und rechtsseitige Schienen 34, 35 für einen, relativ zum Wagen 33 vertikal verschiebbaren Oszillator-Körper 40, dessen Lagerrollen 36 auf den Schienen 34, 35 abrollen. Der Oszillator-Körper ist an geeigneter Stelle mit einer zugehörigen Abtastrolle 19 versehen, welche mittels einer geeigneten Achshalterung etwas von diesem absteht und um eine zugehörige Achse 41 drehbar gelagert ist.

Die Abtastrolle 19 kontaktiert bzw. befindet sich normalerweise im direkten Eingriff mit der Hebe-/Senkkontur 17, welche bei horizontaler Bewegung des Wagens 33 die Abtastrolle und damit den Oszillatorkörper 40 samt zugehörigem Abschlagkörper 20 und Abschlagvorrichtung 43 zwangsweise anhebt bzw. absenkt.

Der Abschlagkörper 20 ist so an dem Oszillatorkörper 40 angebracht, dass er sich bei Einwirkung genügend grosser Kräfte relativ zum Oszillatorkörper verdrehen oder verschieben kann, beispielsweise durch einen Verbindungsstift 42, um dessen vertikal gerichtete Achse eine Drehbewegung stattfinden kann.

Dies geschieht immer dann, wenn bei zu hoher Fahrgeschwindigkeit des Wagens (in horizontale Richtung) die Abschlagvorrichtung 43, hier beispielsweise in Form eines Hebels gezeichnet, die Abschlagkontur 18 oder 18' kontaktiert und bei weiterer Horizontalbewegung des Wagens relativ zur Kontrollkurvenfläche 10 nachgeben muss.

Diese Anordnung stellt nur eine von mehreren Möglichkeiten dar, um bei mechanischer Kontaktgabe zwischen der Abschlagvorrichtung 43 und der Abschlagkontur 18 bzw. 18'einen Bremsvorgang für ein schienengebundenes Fahrzeug auszulösen.

Beispielsweise kann durch eine geeignete kontaktierende Klinke auch eine Auslöse-Relativbewegung um eine horizontal liegende Achse erfolgen, oder in linearer Weise in eine vertikale oder horizontale Bewegungsrichtung.

Für derartige andere Ausgestaltungen sind anstelle des Drehstiftes 42 sinngemäss entsprechende nachgebende Konstruktionselemente vorgesehen. Anstelle des Abschlaghebels 43 können Zahn- oder Reibräder vorgesehen werden.

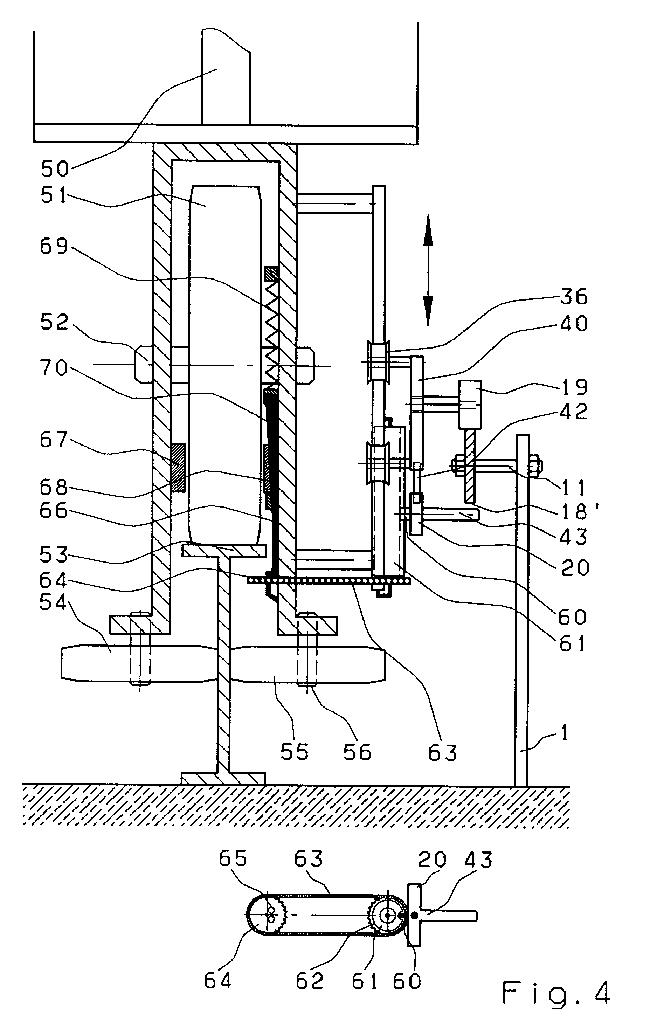

Fig. 4 zeigt schematisch die Kombination der erfindungsgemässen Vorrichtung mit einem Regalbediengerät 50. Dieses stützt sich beispielsweise in Vertikalrichtung über ein Laufrad 51 auf einer Laufschiene 53 ab. Die Laufschiene 53 besteht dabei üblicherweise aus einem Standard-Stahlprofil.

Das Laufrad 51 ist mittels einer horizontal liegenden Achse 52 gelagert und wird durch Seitenführungsrollen 54, 55 gegen einen Versatz quer zur Bewegungsrichtung gesichert.

Die in Fig. 4 schematisch gezeigte Bremsvorrichtung ist zeichnerisch vereinfacht und weicht aus Gründen einer übersichtlichen Darstellung von einer in der Praxis bevorzugten Bremsanordnung ab.

Eine bei Kontaktierung der Abschlagkontur 18' durch den Abschlaghebel 43 erfolgende Drehung des Abschlagkörpers 20 um den Verbindungsstift 42 verdreht in jeder Höhe des Oszillatorkörpers 40 mittels einer Nase 60 einen Profilstab 61, dessen Drehung um eine Vertikalachse mittels eines Kettenrades 62 und zugehöriger Kette 63 auf ein mit Oeffnungen 65 versehenes Kettenrad 64 übertragen wird.

Bei Verdrehung des Kettenrades 64 in die eine oder die andere Richtung kommt eine Betätigungsstange 66 eines Bremskeils 70 über eine der Oeffnungen 65 zu liegen und wird mittels der vorgespannten Feder 69 durch diese hindurchgedrückt.

Der Bremskeil 70 verpresst dabei einen Bremsklotz 68 gegen das Laufrad 51, welches dadurch zwischen Bremsklotz 67 und 68 zu liegen kommt und die erforderliche Notbremsung ausführt.

Zum Lösen der arretierten Bremse ist dementsprechend Bremskeil 70 samt zugehöriger Betätigungsstange anzuheben sowie Abschlaghebel und Zahnrad 62 und 64 in die Normalposition zu bringen.

Die im vorhergehenden dargestellten Ausführungsbeispiele von Auslösevorrichtung 43 und Bremse (Bezugsziffern 60 bis 70) stellen lediglich eine Auswahl der technisch möglichen Ausführungsformen dar und können in vielfältiger Weise abgewandelt werden, insbesondere um höhere Federvorspannungen zu realisieren oder um eine besonders raumsparende Auslösevorrichtung 43 bereitzustellen.

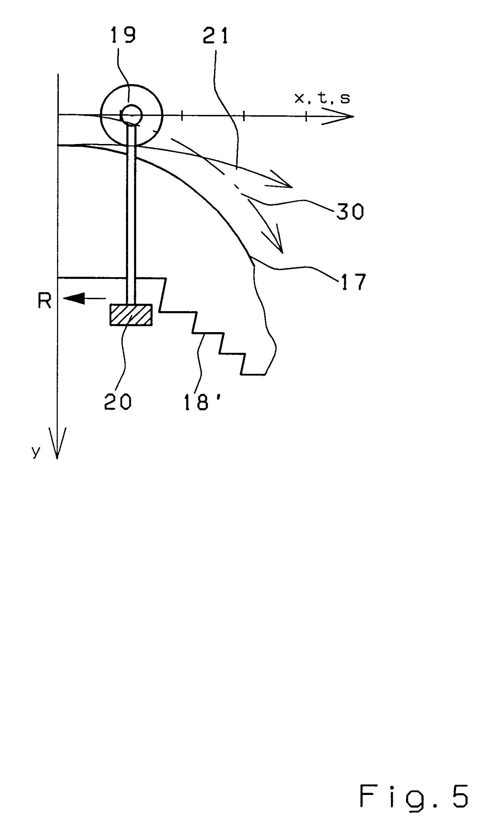

Die Kinematik einer geführten oder im freien Fall befindlichen Führungsrolle 19 zeigt Fig. 5. Der Schwerpunkt der Abtastrolle 19 befindet sich zentral auf der zugehörigen Achse 41, während der gemeinsame Schwerpunkt von Abtastrolle, Oszillatorkörper 40 und weiteren fest mit diesen verbundenen Bestandteilen sich senkrecht darunter befindet. Im freien Fall bewegen sich alle Punkte von Abtastrolle und Oszillatorkörper auf vergleichbaren Parabelbahnen, die sich durch eine Parallelverschiebung unterscheiden.

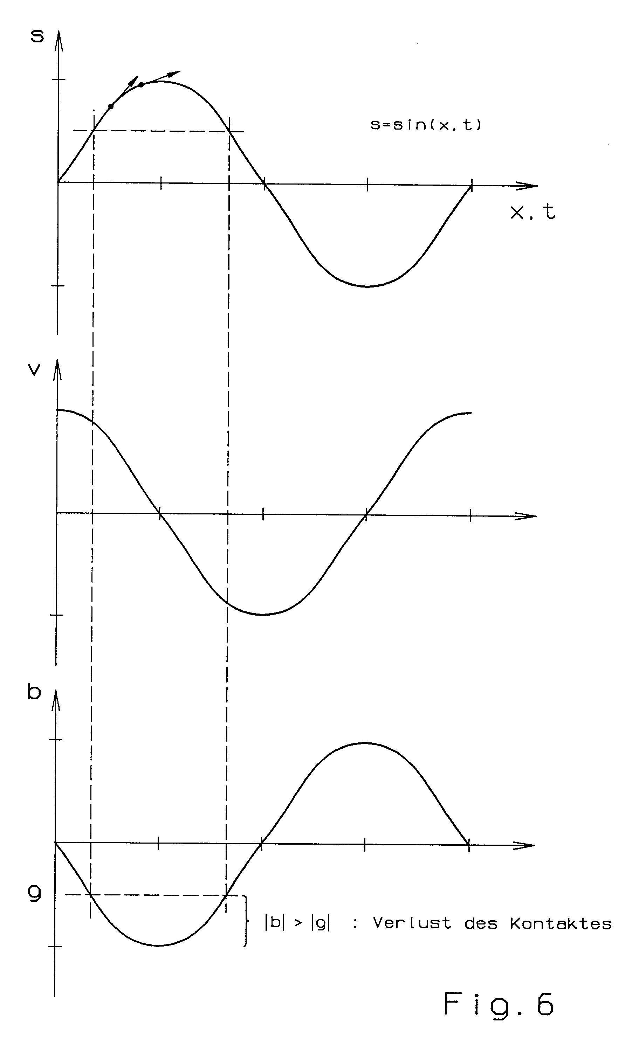

Die annähernd parabelförmige Hebe-/Senkkontur 17 ist auf den Durchmesser der Abtastrolle 19 abgestimmt. Beim Ablaufen der Abtastrolle auf der Kontur 17 wird das Zentrum der Abtastrolle auf einer Grenzparabel 30 geführt. Bei genügend langsamer Bewegung kommt Abschlagkörper 20 nicht in Kontakt mit der gestuften Abschlagkontur 18'. Ist die Form der Grenzparabel gemäss der Funktion y = a·s vorgegeben (vgl. Fig. 6), so ergibt sich mit der Horizontalgeschwindigkeit V_{H} = s/t und y = 0/5·g·t bei freiem Fall eine Grenzgeschwindigkeit v_{g} > = (g/2a)**0,5 , oberhalb der Führungsrolle und Oszillatorkörper der Hebe-/Senkkontur in senkrecht nach unten zeigender Richtung nicht mehr zu folgen vermögen und in einen freien Fall übergehen.

Die gezeigte Abschlagkontur 18' besitzt annähernd eine parabelförmige einhüllende Kurve, welche in bezug auf die Grenzparabel 30 parallelverschoben ist.

Sobald Oszillator 40 mit Abtastrolle 19 und Abschlagkörper 20 durch erhöhte Horizontalgeschwindigkeit den Kontakt mit dem Verlauf der Kontur 17 verlieren und in eine Bewegung freien Falls eintreten, wird der Abschlagkörper 20 je nach betreffender Horizontalgeschwindigkeit und je nach Ausbildung der gestuften Abschlagkontur 18' mit dieser kollidieren und beispielsweise eine Reaktionsbewegung in Pfeilrichtung R ausführen oder, wie im vorhergehenden erläutert, je nach konstruktiver Ausgestaltung des Abschlagkörpers 20, eine andere rotationsmässige oder lineare Reaktionsbewegung.

Die Auslegung der Hebe-/Senkkontur muss nicht notwendigerweise auf Parabelbögen zurückzuführen sein und muss auch nicht symmetrisch ansteigende bzw. abfallende Teilstücke aufweisen. Eine Asymmetrie der Kurvenform von Kontur 17 wird bereits gemäss der Erfindung dadurch gegeben, dass die genannte Grenzgeschwindigkeit v_{g} entlang der s-Achse, also in horizontaler Richtung, definiert ortsabhängig ist und gegen Ende einer Laufschiene 53 gezielt und nach einer vorgegebenden Funktion immer kleiner werdende Werte annimmt.

Eine solche Massnahme bewirkt, dass der Beschleunigungsverlauf für den Oszillator 40 für dessen Bewegung in Vertikalrichtung gemäss der Form der Hebe-/Senkkontur 17 verändert wird.

Fig. 6 zeigt für eine sinusförmige Hebe-/Senkkontur 17 den zugehörigen Verlauf von Vertikalgeschwindigkeit und Vertikalbeschleunigung für einen Oszillator 40.

Für gewisse Amplituden solcher Konturen bzw. je nach horizontaler Fahrgeschwindigkeit eines Oszillators ergeben sich unter Umständen abwärts gerichtete Beschleunigungen, welche grösser als die Erdbeschleunigung sein müssten, um den Oszillator auf der vorgegebenen sinusförmigen Kontur zu führen. Sofern der Oszillator mittels der Abtastrolle 19 nur einseitig geführt ist, ist diese Bedingung bei erhöhter Horizontalgeschwindigkeit nicht erfüllt und der Oszillator vollführt eine Bewegung nach den Gesetzen des schiefen Wurfes bzw. freien Falles.

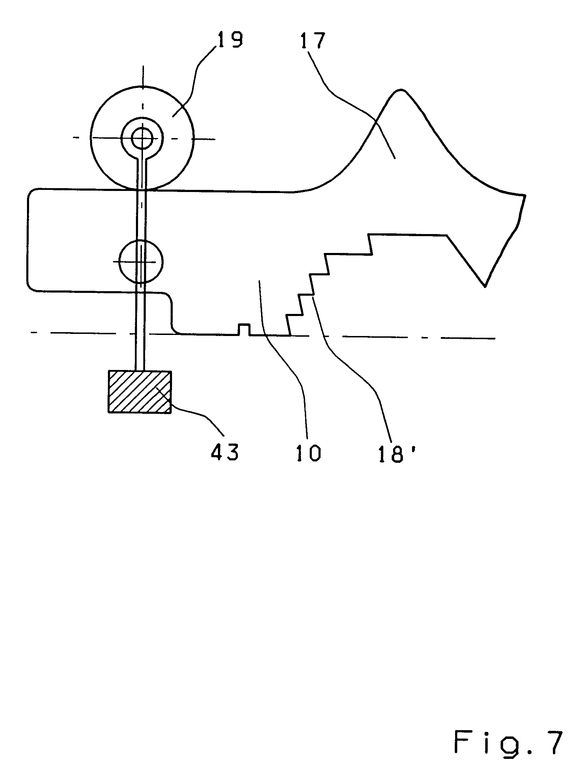

Fig. 7 zeigt ein ausgeführtes Beispiel für die Dimensionierung einer Abtastrolle 19 mit fest angekoppeltem Abtasthebel 43 und den zugehörigen Konturen 17, 18, 18'.

Solange die Abtastrolle 19 in Kontakt mit der Hebe-/Senkkontur 17 bleibt, kann der Abschlaghebel 43 nicht in Interaktion mit der Abschlagkontur 18' treten. Eine solche Interaktion findet erst dann statt, wenn die Abtastrolle 19 eine Horizontalgeschwindigkeit aufweist, die grösser als eine jeweils vorgesehene Grenzgeschwindigkeit ist und infolgedessen sich von der Kontur 17 in vertikaler Richtung löst. Für einen Fahrbereich des Fahrzeuges, in dem relativ grosse Fahrgeschwindigkeiten zugelassen sind, kann die Hebe-/Senkkontur in eine Gerade oder in eine schräg verlaufende Abschlusskontur übergehen, so dass dadurch ein Abschluss der Kontrollkurvenfläche in horizontaler Richtung definiert wird.

Mit dieser Massnahme ist es möglich, die Kontrollkurvenfläche in mehrere Teilbereiche aufzuteilen, zum Beispiel so, dass nur im Bereich der Gleisenden für das Fahrzeug jeweils eine Kontrollkurvenfläche vorgesehen wird.

## Patentansprüche

1. Einrichtung zur Notbremsung an einem schienengebundenen Fahrzeug, insbesondere Regalbediengerät, mit einem am Fahrzeug befestigten Bremsorgan, und mit einer Auslösevorrichtung, die beim Ueberschreiten einer zulässigen Geschwindigkeit des Fahrzeugs das Bremsorgan aktiviert, dadurch gekennzeichnet, dass die Auslösevorrichtung einen linear und im wesentlichen in vertikale Richtung verschiebbaren Schlitten, Wagen (33) oder mechanischen Oszillator aufweist, welcher mittels eines Abtastorgans (19, 43) eine ortsfest installierte Kontrollkurve oder Steuerkontur abtastet.

2. Einrichtung zur Notbremsung an einem schienengebundenen Fahrzeug, insbesondere Regalbediengerät, mit einem am Fahrzeug befestigten Bremsorgan, und mit einer Auslösevorrichtung, die beim Ueberschreiten einer zulässigen Geschwindigkeit des Fahrzeugs das Bremsorgan aktiviert, dadurch gekennzeichnet, dass eine ausserhalb des Fahrzeuges installierte plankenförmige Kontrollkurvenfläche (10) vorhanden ist, deren Flächennormale im wesentlichen horizontal ausgerichtet ist, mit einem obenliegenden ersten Berandungsteil (17), welcher als erste mechanische Steuerkurve ausgestaltet ist, und mit einem darunter angeordneten zweiten Berandungsteil (18, 18'), welcher als zweite mechanische Steuerkurve ausgestaltet ist, wobei der obenliegende erste Berandungsteil (17) als Kante oder schmale Fläche mit annähernd wellenförmiger Kontur ausgebildet ist und der darunter angeordnete Berandungsteil (18, 18') gegenüber dem obenliegenden Berandungsteil (17) einen angepassten Verlauf nach Massgabe vordefinierter Abstände aufweist.

3. Einrichtung nach Anspruch 2, dadurch gekennzeichnet, dass die Kontrollkurvenfläche (10) seitlich einer Schiene des Fahrzeugs angeordnet ist.

4. Einrichtung nach einem der Ansprüche 2 oder 3, dadurch gekennzeichnet, dass die Kontrollkurvenfläche (10) mittels distanzhaltenden Elementen, insbesondere Distanzbolzen, an einem Träger oder an einer Wand befestigt ist.

5. Einrichtung nach einem der Ansprüche 1 bis 4, dadurch gekennzeichnet, dass die Kontrollkurvenfläche (10) einzelne Segmente aufweist, welche mittels Verbindungselementen, insbesondere Verbindungslaschen (14), aneinandergereiht und miteinander verbunden sind.

6. Einrichtung nach einem der Ansprüche 1bis 5, dadurch gekennzeichnet, dass eine Kontrollkurve oder Steuerkontur Kurvenanteile aufweist, welche annähernd parabel- oder sinusförmig sind.

7. Einrichtung nach Anspruch 6, dadurch gekennzeichnet, dass die Kurvenanteile durch Parameter spezifiziert sind, welche eine Funktion des Ortes oder der Fahrzeugposition sind.

8. Einrichtung nach Anspruch 2, dadurch gekennzeichnet, dass das Berandungsteil (18, 18') als Abschlagkontur und das Berandungsteil (17) als Hebe-/Senkkontur einer Kontrollkurvenfläche (10) ausgebildet sind und eine annähernd gleichbleibende Distanz in Vertikalrichtung aufweisen.

9. Einrichtung nach einem der Ansprüche 1 bis 8, dadurch gekennzeichnet, dass die Abschlagkontur (18) mindestens teilweise eine gezahnte oder geriffelte Oberflächenstruktur aufweist.

10. Einrichtung nach einem der Ansprüche 1 bis 9, dadurch gekennzeichnet, dass Oszillator-Körper (20) mit zugehöriger Abtastrolle (19) und Abschlagvorrichtung (43) bei überschrittener Maximalgeschwindigkeit vorübergehend eine vertikal ungebundene Bewegung nach den Gesetzen des freien Falls ausführt.

11. Einrichtung nach einem der Ansprüche 2 bis 10, dadurch gekennzeichnet, dass durch die Konturen (17, 18) erzeugte wellige Gestalt der Kontrollkurvenfläche (10), in Richtung eines Endes einer Laufschiene eine zunehmende Anzahl an Schwingungen pro Längeneinheit aufweist.

12. Einrichtung nach einem der Ansprüche 1 bis 11, dadurch gekennzeichnet, dass das Auslöseorgan einen um eine Vertikalachse drehbaren Hebel (43) oder linear beweglichen Auslöseschalter aufweist, welcher bei Kontakt mit der Abschlagkontur (18, 18') die Auslösevorrichtung betätigt.

13. Einrichtung nach einem der Ansprüche 1 bis 12, dadurch gekennzeichnet, dass das Auslöseorgan einen um eine horizontale Achse drehbaren Hebel oder linear beweglichen Auslöseschalter aufweist, welcher bei Kontakt mit der Abschlagkontur (18, 18') die Auslösevorrichtung betätigt.

14. Einrichtung nach einem der Ansprüche 1 bis 13, dadurch gekennzeichnet, dass der Oszillatorkörper (40) im wesentlichen flächig geformt ist und eine Mehrzahl an Rädern (43) aufweist, wobei Flächennormale und Radachsen parallel ausgerichtet sind.

15. Einrichtung nach einem der Ansprüche 1 bis 14, dadurch gekennzeichnet, dass die Einrichtung mit einer unterteilten Kontrollkurvenfläche versehen ist, deren einzelne Teil stücke sich in der Nähe eines jeweiligen Endes eines Schienenstranges befinden.

16. Einrichtung nach einem der Ansprüche 1 bis 15, dadurch gekennzeichnet, dass das Auslöseorgan und mindestens ein Bremsorgan des Fahrzeugs mittels einer mechanischen Uebertragungseinrichtung in Wirkverbindung steht.

17. Einrichtung nach Anspruch 16, dadurch gekennzeichnet, dass die mechanische Uebertragungseinrichtung in Form einer Kette, eines Seiles, einer Betätigungsstange oder einer hydraulischen Uebertragungseinrichtung ausgeführt ist.

18. Einrichtung nach einem der Ansprüche 1 bis 17, zur Verwendung bei einem Lagerbediengerät.
